# EUROPEAN PATENT APPLICATION

(11) **EP 4 303 521 A1**
(43) Date of publication of application: **10.01.2024**
(21) Application number: 22763355.9
(22) Date of filing: 02.03.2022
(51) Int. Cl.: F28F 3/08, F28F 3/00, F28D 9/00

(54) **HEAT EXCHANGER AND AIR TREATMENT DEVICE**

(30) Priority: 03.03.2021 CN 202110236018; 03.03.2021 CN 202120465139 U
(71) Applicant: Daikin Industries, Ltd., Osaka-Shi, Osaka 530-0001 (JP)
(72) Inventor: WANG, Zhiwen, Shanghai 201108 (CN)
(74) Representative: Hoffmann Eitle
(86) International application number: PCT/JP2022/008974
(87) International publication number: WO 2022/186302

(57) **Abstract**

The invention provides a heat exchanger and an air treatment device. The heat exchanger according to the invention includes a plurality of core fins and a plurality of films, the core fins and the films are stacked alternately to constitute an air flow passage, the plurality of core fins includes a first core fin and a second core fin constituting the air flow passage therebetween, the air flow passage includes two port parts disposed to face each other, one of the port parts serves as an inlet and another one serves as an outlet, and an air flow flows from the inlet to the outlet in an air flow direction. In a stacking direction of the first core fine and the second core fin, an outermost side of at least one of the port parts has a height longer than a height at a different position between the inlet and the outlet of the air flow passage. The heat exchanger according to the invention reduces resistance of the air flow entering the heat exchanger, further smooths the air flow, to increase flow speed in the heat exchanger for improvement in heat exchange efficiency of the heat exchanger.

## Description

### TECHNICAL FIELD

The present invention relates to a technical field on air treatment and conditioning, and particularly relates to an air treatment device including a heat exchanger.

### BACKGROUND ART

A conventional air treatment device typically includes a heat exchanger that is configured to allow indoor exhaust air and fresh air to flow in the heat exchanger while crossing each other. Air flows having two paths and crossing each other causes a heat transfer phenomenon and a total heat exchange process. A typical heat exchanger includes a core having a hexagonal structure including core fins and films stacked alternately, and includes two sets of port parts. One set of the port parts normally causes indoor exhaust air to flow, whereas another set of the port parts causes fresh air to flow. Air flows having two paths execute heat exchange via the films in the heat exchanger.

### SUMMARY OF THE INVENTION

### <Technical Problem>

Each of the core fins can be made of a resin material and can be molded integrally. The films can be made of paper or plastic. However, it has been found that a conventional heat exchanger in use has large pressure loss to have difficulty in effectively increasing suction air volume and thus restrict heat exchange efficiency of the heat exchanger.

Furthermore, the inventor has found that an air flow deforms the films in the conventional heat exchanger into a concave shape or a convex shape between two adjacent partitioning ribs, further increases air flow resistance to lower heat exchange efficiency of the heat exchanger, and deformation of the films over a long period of time causes damage to the films, to eventually affect the life of the heat exchanger.

It is therefore necessary to improve the conventional heat exchanger.

### <Solution to Problem>

In order to supplement such an insufficient conventional technique, the present invention provides a heat exchanger including a plurality of core fins and a plurality of films, each of the films attached to a side face of each of the core fins, the core fins and the films alternately stacked to constitute an air flow passage, the plurality of core fins including a first core fin and a second core fin, the first core fin and the second core fin stacked to constitute the air flow passage therebetween, the air flow passage including two port parts disposed to face each other, one of the port parts serving as an inlet and another one of the port parts serving as an outlet, an air flow flowing from the inlet to the outlet in an air flow direction. The first core fin and the second core fin being stacked each include a port lateral side part to constitute the port parts, in a stacking direction of the first core fin and the second core fin, a fin interlayer distance on at least an outermost side of at least one of the port parts is longer than a fin interlayer distance at a different position between the inlet and the outlet of the air flow passage, and/or the port lateral side part of the second core fin is provided with a port part partitioning rib, the port lateral side part of the first core fin has a surface in contact with the port part partitioning rib, and the port part partitioning rib is smaller in width than a principal partitioning rib extending between the port lateral side part of the port part serving as the inlet and the port lateral side part of the port part serving as the outlet.

According to the technical idea, increase in fin interlayer distance at the port parts of the core fins or decrease in width of the port part partitioning rib achieves increase in area of the port parts, for reduction in pressure loss and increase in volume of air flowing in the port parts, and further for improvement in heat exchange efficiency of the heat exchanger.

According to an aspect of the present invention, the first core fin and the second core fin being stacked each have a port lateral side part constituting the port parts, and the port lateral side part of the first core fin is tapered toward the outermost side in a transverse section parallel to the air flow direction.

In the heat exchanger thus configured, the port parts on the air flow have a flared shape toward the outermost side to reduce resistance of the air flow entering the heat exchanger or leaving the heat exchanger, further smooth the air flow, as well as increase air flow volume, so as to increase flow speed in the heat exchanger for improvement in heat exchange efficiency of the heat exchanger.

According to another aspect of the present invention, the port lateral side part of the second core fin has a surface directed toward the first core fin and provided with a plurality of port part partitioning ribs. The plurality of port part partitioning ribs and the tapered port lateral side part of the first core fin cooperate with each other to avoid crossflow of air flows in adjacent flow paths, equalize air flow distribution in the heat exchanger, further cause the port part partitioning ribs to support the port lateral side part for improvement in strength of the core fins.

According to still another aspect of the present invention, the port lateral side part of the first core fin has a surface directed toward the air flow passage and having one of outline shapes consisting of a slant face, a curved face, and a stepped face, so as to increase a port area as well as to guide an air flow entering the heat exchanger or leaving the heat exchanger for reduction of air flow inhibition.

According to a further different aspect of the present invention, the fin interlayer distance on an outermost side of the inlet of the air flow passage is longer than the fin interlayer distance perpendicular to the air flow direction at a different position between the inlet and the outlet of the air flow passage. The inlet has a maximum height entirely in the air flow passage. This configuration can increase suction air volume of the heat exchanger, for improvement in heat exchange efficiency of the heat exchanger.

According to a further different aspect of the present invention, the port parts each have a first end and a second end in an extending direction of the port lateral side part, and the port part partitioning rib closest to the first end among the plurality of port part partitioning ribs of the second core fin is shorter than the remaining port part partitioning ribs. This configuration allows the air flow to smoothly flow into a flow path close to the first end or to flow out of the flow path, secures sufficient air flow volume in the flow path close to the first end, and further equalizes the air flow in the heat exchanger, for improvement in heat exchange efficiency of the heat exchanger.

According to a further different aspect of the present invention, the heat exchanger further includes a shell accommodating the plurality of core fins and the plurality of films, the air flow passage including a first flow path and a second flow path crossing each other, the first flow path and the second flow path each having an inlet and an outlet, the inlet of the first flow path being disposed adjacent to the outlet of the second flow path, the inlet of the second flow path being disposed adjacent to the outlet of the first flow path, in which the shell is provided with a baffle positioned adjacent to the inlet and the outlet, the baffle is bent to constitute a filter guide rail, and the port part partitioning rib at a position corresponding to the guide rail is shorter than the remaining port part partitioning ribs.

The filter provided at the inlet leads to improved cleanness of the air flow entering the heat exchanger. The baffle as part of the shell can fix the stacked core fins, to enhance strength of the heat exchanger. Bending the baffle to constitute the filter guide rail facilitates processing, simplifies its structure, and facilitates attachment and detachment of the filter. The air flow at the end of the port part has a smaller flow rate in comparison to an intermediate member of the port part depending on an attachment structure or a disposed position of the heat exchanger. Particularly, the partitioning rib at least at the first end is made shorter than the remaining partitioning ribs, to prevent air flow inhibition by the baffle, increase suction air volume and supply air volume of the port at the end, and to further equalize the air flow sucked into or discharged from the port part, for improvement in heat exchange efficiency of the heat exchanger.

According to a different aspect of the present invention, the partitioning ribs each have an end provided with a channelizing part shaped to guide an air flow in a travel direction of the air flow. The channelizing part thus provided can guide the air flow entering the heat exchanger or leaving the heat exchanger. This configuration reduces air flow inhibition at the port part for increase in air flow volume.

According to a further different aspect of the present invention, the plurality of port part partitioning ribs of the second core fin includes a relatively short first port part partitioning rib and a relatively long second port part partitioning rib provided alternately, the port parts each include a first end and a second end in an extending direction of the port lateral side part, and the port part partitioning rib closest to the first end corresponds to the first port part partitioning rib, so as to further increase an area of the port part for increase in suction air volume or supply air volume.

According to a further different aspect of the present invention, the first core fin includes a first frame, the second core fin includes a second frame, the first frame and the second frame each include an outer frame having a hexagonal shape, a principal partitioning rib extending from the inlet to the outlet basically in the air flow direction of the air flow passage, and two longitudinal ribs extending to transverse the air flow direction in the air flow passage, the two longitudinal ribs partitioning the outer frame into two triangular regions and a quadrate region positioned between the two triangular regions, and the quadrate region further includes an auxiliary partitioning rib basically parallel to the principal partitioning rib.

The auxiliary partitioning rib thus provided exerts an auxiliary protective function for the films, to prevent the air flow particularly increased in flow rate from deforming the films. This reduces air flow resistance in the heat exchanger.

According to a further different aspect of the present invention, the auxiliary partitioning rib is equally distant from adjacent principal partitioning ribs provided on respective sides of the auxiliary partitioning rib. This configuration further equalizes the air flow in the air flow passage, enhances strength of the heat exchanger, and improves heat exchange efficiency.

According to a further different aspect of the present invention, the auxiliary partitioning rib is equal to or less than the principal partitioning rib in terms of height in the stacking direction. This prevents deformation of the films by the air flow, minimizes occupation of an air flow path by the auxiliary partitioning rib, to secure volume of air flowing in the heat exchanger.

According to a further different aspect of the present invention, the principal partitioning rib extending between the port lateral side part of the port part serving as the inlet and the port lateral side part of the port part serving as the outlet has a side bonded with the film is smaller in width than a side distant from the film. A partitioning rib widened on a side close to a film improves close adhesion between the partitioning rib and the film. This leads to increase in sealing property in the heat exchanger, reduction of air flow leakage risk, and can also minimize occupation of the air flow path by the auxiliary partitioning rib.

According to a further different aspect of the present invention, the principal partitioning rib extending between the port lateral side part of the port part serving as the inlet and the port lateral side part of the port part serving as the outlet has a side distant from the film being bonded and provided with an opening allowing passage of an air flow. The opening thus provided leads to increase in flow area of the air flow to improve air flow volume.

According to a further different aspect of the present invention, the first core fin includes a first frame, the second core fin includes a second frame, the first frame and the second frame are stacked to have an identical outline shape, the port lateral side part of the first core fin and the port lateral side part of the second core fin are provided along a first portion and a second portion disposed at opposite corners of the first frame and the second frame, each of the first frame and the second frame further includes a third portion and a fourth portion disposed at opposite corners, a crossing port lateral side part is provided along the third portion and the fourth portion, the crossing port lateral side part of the first frame has a surface opposite to the second core fin and provided with a plurality of port part partitioning ribs, the crossing port lateral side part of the second frame is tapered toward the outermost side in a transverse section parallel to the air flow direction, or the port part partitioning ribs at the crossing port lateral side part of the first frame are smaller in width than the principal partitioning rib extending between the port lateral side part of the port part serving as the inlet and the port lateral side part of the port part serving as the outlet. The crossing port lateral side part at the second frame has an outline shape of any one of a slant face, a curved face, and a stepped face, the outline shape and the partitioning rib at the port lateral side part of the second core fin are provided in each of two side faces of the second frame, and are simply structured, to facilitate stacking the first core fin and the second core fin for processing efficiency of the heat exchanger.

The present invention further provides a heat exchanger including a plurality of core fins and a plurality of films, each of the films attached to a side face of each of the core fins, the core fins and the films stacked alternately to constitute an air flow passage, the plurality of core fins including a first core fin and a second core fin, the first core fin and the second core fin stacked to constitute the air flow passage therebetween, the air flow passage including two port parts disposed to face each other, one of the port parts serving as an inlet and another one of the port parts serving as an outlet, an air flow flowing from the inlet to the outlet in an air flow direction, in which the first core fin and the second core fin each include a principal partitioning rib extending between the two port parts facing each other, the first core fin and the second core fin being stacked each include a port lateral side part constituting the port parts, the port lateral side part of the first core fin or the second core fin is provided with a port part partitioning rib, the port part partitioning rib is smaller in width than the principal partitioning rib to increase a flow rate of the air flow entering the port parts.

The present invention also provides an air treatment device including a fresh air port, a supply air port, a return air port, and an exhaust air port. The air treatment device further includes the heat exchanger according to the above idea, and the port parts of the heat exchanger each include a first inlet, a first outlet, a second inlet, and a second outlet. The present invention further provides an air treatment device, in which the fresh air port communicates with the first inlet to import a fresh air flow, the supply air port communicates with the first outlet to export the fresh air flow, the return air port communicates with the second inlet to import an indoor air flow, and the exhaust air port communicates with the second outlet to export the indoor air flow. The fresh air flow and the indoor air flow cross each other and flow in the heat exchanger to execute heat exchange. The heat exchanger is one of core members of the air treatment device. The air treatment device including the heat exchanger according to the present invention is improved in entire processing efficiency of the air treatment device.

In the heat exchanger thus configured, the port parts on the air flow have a flared shape toward the outermost side or are decreased in width of the partitioning ribs to reduce resistance of the air flow entering the heat exchanger, further smooth the air flow, as well as to increase volume of air entering the heat exchanger or leaving the heat exchanger, and to improve flow speed in the heat exchanger, for improvement in heat exchange efficiency of the heat exchanger.

A frame structure of the core fins according to the present invention securely protects and supports the films in the heat exchanger, prevents deformation of the films by the air flow, to avoid air flow inhibition in the heat exchanger due to deformation of the films, and avoid damage to the films due to deformation of the films over a long period of time, for a prolonged working life of the heat exchanger.

### BRIEF DESCRIPTION OF THE DRAWINGS

FIG. 1 is a perspective view of a heat exchanger according to a preferred embodiment of the present invention.
FIG. 2 is a partial perspective view of a set of core fins included in the heat exchanger according to the preferred embodiment of the present invention.
FIG. 3 is a front view of a first core fin included in the heat exchanger according to the preferred embodiment of the present invention.
FIG. 4 is a front view of a second core fin included in the heat exchanger according to the preferred embodiment of the present invention.
FIG. 5 is a partial perspective view of a port lateral side part of the first core fin in the heat exchanger according to the preferred embodiment of the present invention.
FIG. 6 is a partial perspective view of a port lateral side part of the second core fin in the heat exchanger according to the preferred embodiment of the present invention.
FIG. 7 is a partial plan view of a core fin attached to a guide rail according to the preferred embodiment of the present invention.
FIG. 8 is a perspective view of part of the second core fin in the heat exchanger according to the preferred embodiment of the present invention.
FIG. 9 is a perspective view of other part of the second core fin in the heat exchanger according to the preferred embodiment of the present invention.
FIG. 10 is a partial perspective view of a core fin in the heat exchanger according to the preferred embodiment of the present invention.
FIG. 11 is a partial plan view of a core fin in the heat exchanger according to the preferred embodiment of the present invention.
FIG. 12A is a schematic view depicting a disposition mode of partitioning ribs applicable to a core fin in the heat exchanger according to the preferred embodiment of the present invention.
FIG. 12B is a schematic view depicting another disposition mode of the partitioning ribs applicable to the core fin in the heat exchanger according to the preferred embodiment of the present invention.
FIG. 12C is a schematic view depicting still another disposition mode of the partitioning ribs applicable to the core fin in the heat exchanger according to the preferred embodiment of the present invention.
FIG. 13A is a schematic view depicting a combination pattern of core fins included in the heat exchanger according to the preferred embodiment of the present invention.
FIG. 13B is a schematic view depicting another combination pattern of the core fins included in the heat exchanger according to the preferred embodiment of the present invention.
FIG. 14 is a schematic view of a transverse section parallel to an air flow direction, of a port part on an air flow passage according to the preferred embodiment of the present invention.
FIG. 15 is a schematic plan view of a core fin in a heat exchanger according to another preferred embodiment of the present invention.
FIG. 16A is a perspective view of a core fin in the heat exchanger according to the preferred embodiment of the present invention.
FIG. 16B is a perspective view of another core fin in the heat exchanger according to the preferred embodiment of the present invention.
FIG. 17 is an enlarged schematic view of a pin hole provided in a core fin according to the preferred embodiment of the present invention.
FIG. 18 is a perspective view excluding films, depicting a plurality of first core fins and a plurality of second core fins having been stacked, according to the preferred embodiment of the present invention.
FIG. 19 is a schematic plan view of an air treatment device including the heat exchanger according to the preferred embodiment of the present invention.

### DESCRIPTION OF EMBODIMENTS

The present invention will be further described hereinafter with reference to specific embodiments and the drawings. The following description refers to more details for adequate comprehension of the present invention, whereas the present invention can apparently be embodied in various other modes different from the following description. Those skilled in the art can achieve similar promotion and deduction in accordance with actual application conditions without departing from the subject matters of the present invention. Accordingly, the subject matters of the specific embodiments should not limit the protection scope of the present invention.

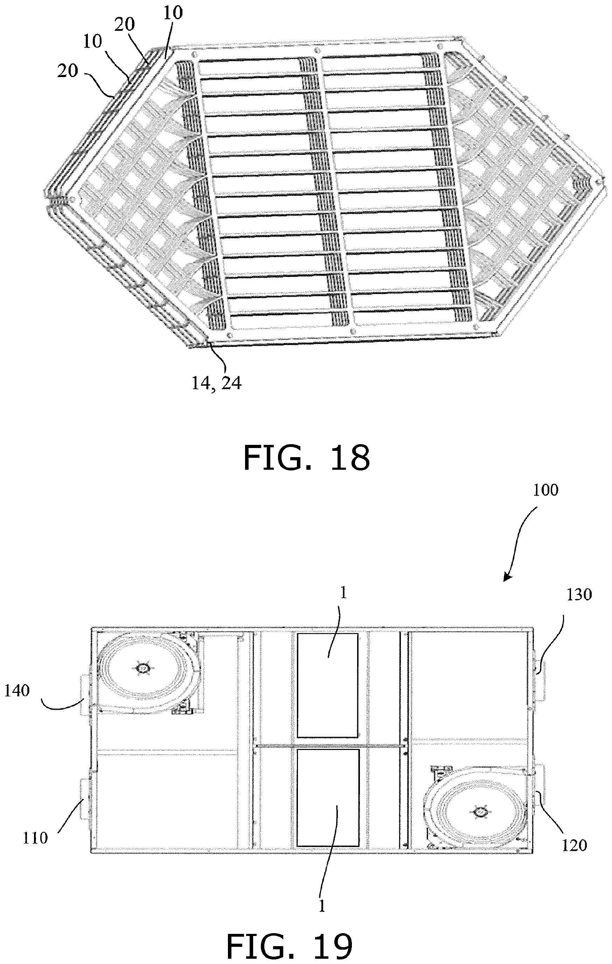

As depicted in FIG. 19, an air treatment device 100 includes two heat exchangers 1 attached at a central part. The air treatment device may include a single or a plurality of heat exchangers 1 in accordance with size of the air treatment device. Normally, the air treatment device including the single heat exchanger 1 can have a maintenance port provided in a side face of a device case in order to facilitate attachment and detachment of the heat exchanger 1. The air treatment device including the plurality of heat exchangers 1 can also have the maintenance port provided in the side face of the device case for attachment and detachment of the heat exchangers 1, or can have the maintenance port provided in a device bottom plate to attach or detach the heat exchangers 1 from below. In the air treatment device 100 including the plurality of heat exchangers 1, the heat exchangers 1 adjacent to each other are connected by a sealing material to reduce air flow leakage in the device.

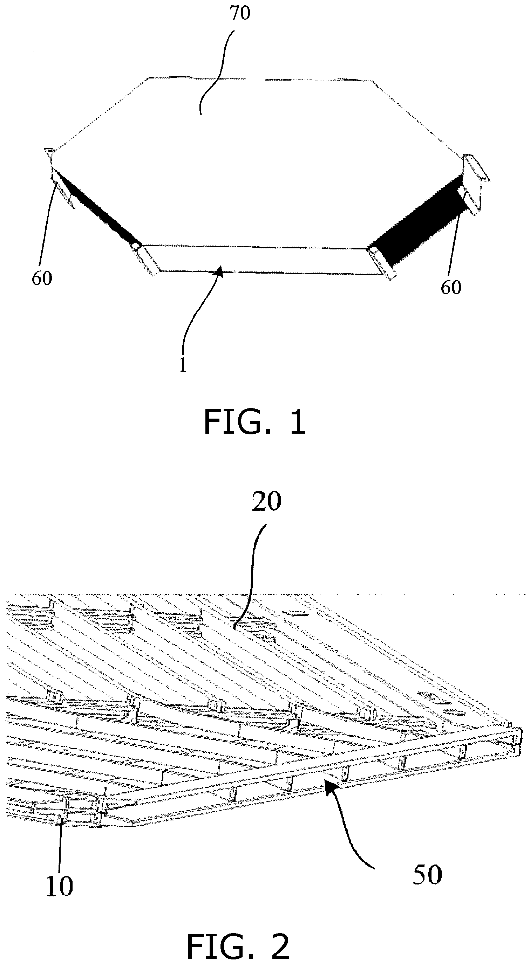

FIG. 1 is a perspective view of the heat exchanger 1 according to the preferred embodiment of the present invention, which is applicable to the air treatment device 100. The heat exchanger 1 is constituted by stacking a plurality of core fins and a plurality of films, each of the core fins and the films is shaped identically. The heat exchanger 1 includes the core fins and the films stacked to have a hexagonal prism shape as depicted in FIG. 1 and FIG. 19. Two of the core fins adjacent to each other interpose one of the films so as to have a space provided between two of the films and constituting an air flow passage allowing passage of an air flow. Each of the core fins and the films may alternatively have a rectangular shape, a square shape, or a diamond shape.

The heat exchanger 1 according to the preferred embodiment has air flow passages crossing each other. Namely, the heat exchanger 1 includes two sets of inlets and outlets to constitute two different air flow paths. Specifically, the heat exchanger 1 having the hexagonal prism shape as depicted in FIG. 1 has two long side faces and four short side faces. The inlets and the outlets are provided respectively in two pairs of opposing short side faces, to constitute the two different air flow paths. One of the air flow paths extends from an upper left corner of the heat exchanger 1 depicted in FIG. 1 to a lower right corner of the heat exchanger 1, whereas another one of the air flow paths extends from a lower left corner of the heat exchanger 1 depicted in FIG. 1 to an upper right corner of the heat exchanger 1.

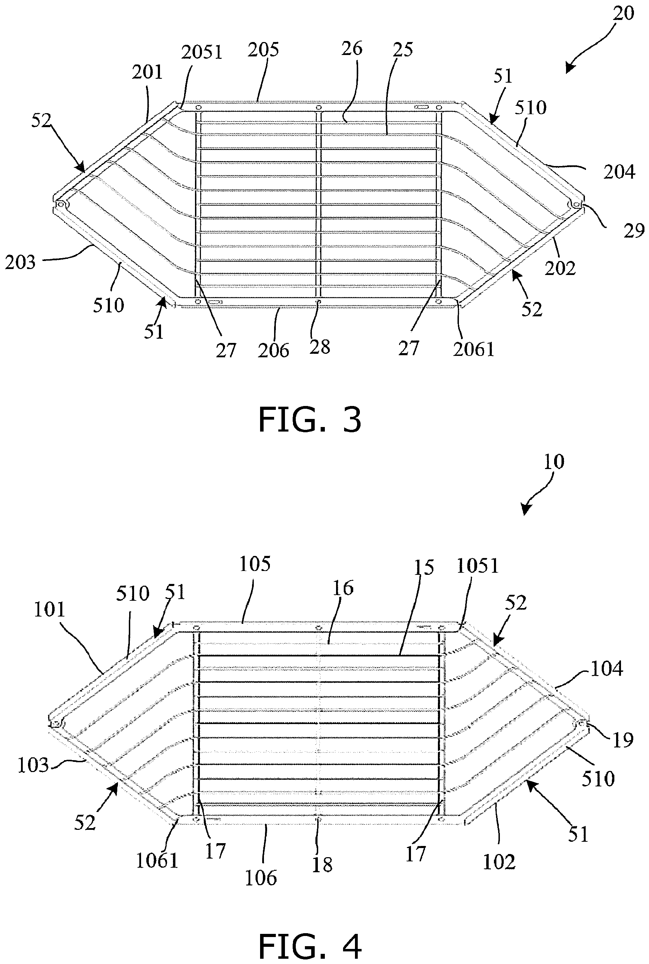

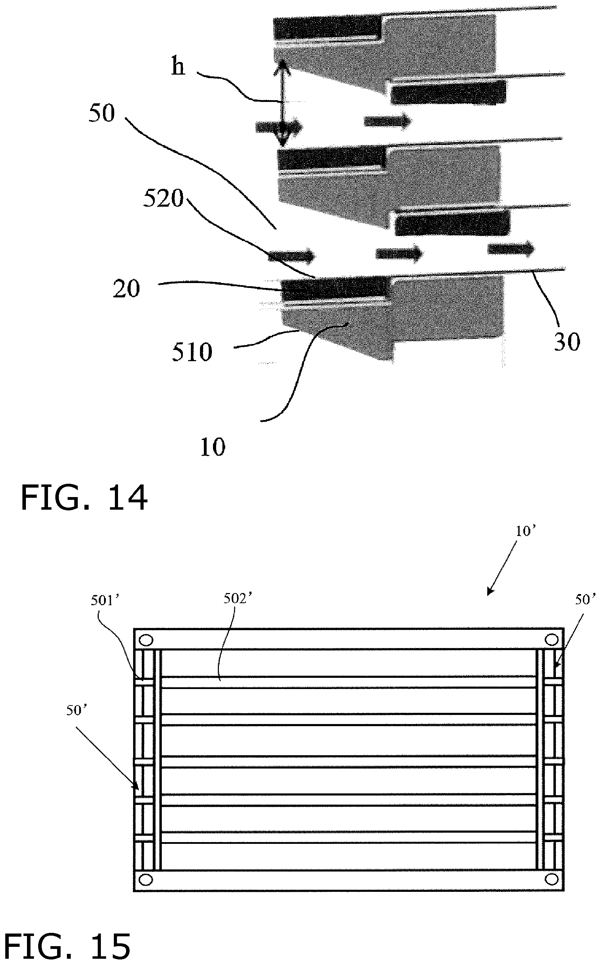

As depicted in FIG. 3 and FIG. 4, the core fins included in the heat exchanger 1 and constituting the air flow passages crossing each other include a first core fin 10 and a second core fin 20 disposed adjacent to each other. As apparent in FIG. 14, the two core fins 10 and 20 interpose a single film 30.

The first core fin 10 and the second core fin 20 each have a hexagonal circumferential outline shape. As depicted in FIG. 3 and FIG. 4, the core fins 10 and 20 according to the preferred embodiment each have two opposing side faces, as well as have two long lateral sides 105 and 106, two long lateral sides 205 and 206, four short lateral sides 101, 102, 103, and 104, and four short lateral sides 201, 202, 203, and 204, respectively. For precise description, as depicted in FIG. 3 and FIG. 4, the four short lateral sides of the first core fin 10 are called a first short lateral side 101, a second short lateral side 102, a third short lateral side 103, and a fourth short lateral side 104, whereas the four short lateral sides of the second core fin 20 are called a first short lateral side 201, a second short lateral side 202, a third short lateral side 203, and a fourth short lateral side 204. One of the two opposing side faces of each of the first core fin and the second core fin constitutes a face to which the film 30 is bonded.

In a case where the first core fin 10 and the second core fin 20 are stacked integrally, the four short lateral sides 101, 102, 103, and 104 and the four short lateral sides 201, 202, 203, and 204 face each other, respectively, so as to constitute two sets of port parts 50. Specifically, the first short lateral sides 101 and 201 and the second short lateral sides 102 and 202 of the two core fins 10 and 20 constitute a first set of the port parts 50, whereas the third short lateral sides 103 and 203 and the fourth short lateral sides 104 and 204 of the two core fins 10 and 20 constitute a second set of the port parts 50. Each set of the port parts 50 have an inlet and an outlet. The heat exchanger 1 includes the plurality of first core fins 10 and the plurality of second core fins 20 stacked alternately, and the film 30 interposed between the first core fin 10 and the second core fin 20, so as to constitute air flow passages having two paths. The air flow passage having a first path communicates from the first short lateral sides 101 and 201 to the second short lateral sides 102 and 202, and the air flow passage having a second path communicates from the third short lateral sides 103 and 203 to the fourth short lateral sides 104 and 204.

When the heat exchanger 1 is included in the air treatment device 100, the air flow passage having the first path may guide a fresh air flow, and a second air flow passage guides an indoor air flow. The air treatment device 100 normally includes a fresh air fan and an exhaust air fan. The fresh air fan guides the fresh air flow from a fresh air port 110 of the air treatment device to a supply air port 120 through the heat exchanger 1 along a first air flow passage. The exhaust air fan guides the indoor air flow from a return air port 130 of the air treatment device 100 to an exhaust air port 140 through the heat exchanger 1 along the second air flow passage. The fresh air flow and the exhaust air flow travel between the core fins 10 and 20 in the heat exchanger 1 along the paths crossing each other, to achieve heat exchange between the fresh air flow and the exhaust air flow in the heat exchanger 1.

Each of the short lateral sides of the first core fin 10 and the second core fin 20 has a port lateral side part 51 or a port lateral side part 52 corresponding thereto. When the first core fin 10 and the second core fin 20 are stacked, the corresponding port lateral side parts 51 and 52 can cooperatively constitute the port part 50 serving as an air flow passage. Furthermore, the first core fin 10 and a second core fin 20 paired and adjacent to each other interpose only the port lateral side parts 51 and 52 provided at one set of opposing short lateral sides and facing each other, to constitute the port part 50. The port lateral side parts at the remaining opposing short lateral sides are provided back to back to be sealed and joined together so as to constitute a sealing part, instead of constituting the port part 50.

FIG. 2 depicts the single port part 50 constituted by the two core fins 10 and 20 facing each other and stacked. The port part 50 in use may serve as an air flow inlet or an air flow outlet. Particularly, the port part 50 according to the present invention has a fin interlayer distance on at least an outermost side of the port part 50 is longer than a fin interlayer distance at a different position on the air flow passage between the two port parts 50 being paired in a stacking direction of the first core fin 10 and the second core fin 20 (i.e. in a thickness direction of the first core fin 10 and the second core fin 20). The fin interlayer distance between the first core fin 10 and the second core fin 20 indicates a height distance allowing an air flow to flow between the two core fins 10 and 20 in the stacking direction of the first core fin 10 and the second core fin 20. That is, in a transverse section perpendicular to an air flow direction, a portion having the longest height in the section is positioned on the outermost side of the port part 50. The port part 50 expanding toward the outermost side can minimize resistance of an air flow entering the heat exchanger 1 to increase a flow rate of an air flow entering the air flow passage. This improves work efficiency of the heat exchanger 1.

FIG. 14 is a schematic view of a transverse section of the port part 50 constituted by the paired port lateral side parts 51 and 52 of the first core fin 10 and the second core fin 20. The transverse section is taken basically in parallel with the air flow direction of the air flow passage. As apparent in FIG. 14, a slant surface 510 in the port lateral side part of the first core fin 10 and a parallel surface 520 in the port lateral side part of the second core fin 20 surround to constitute the port part 50, the port part 50 has a maximum height h on the outermost side, which is preferably, for example, 2 mm to 4 mm, and is more preferably 3 mm, and the air flow passage has a height in a middle portion of the air flow passage behind the port part 50 is 1 mm to 2 mm, and is preferably 1.5 mm. In this manner, an air flow in an air flow passage can totally exchange heat with air flows in air flow passages on respective sides of the air flow passage through films provided on the respective sides of the air flow passage, to achieve high performance of the heat exchanger.

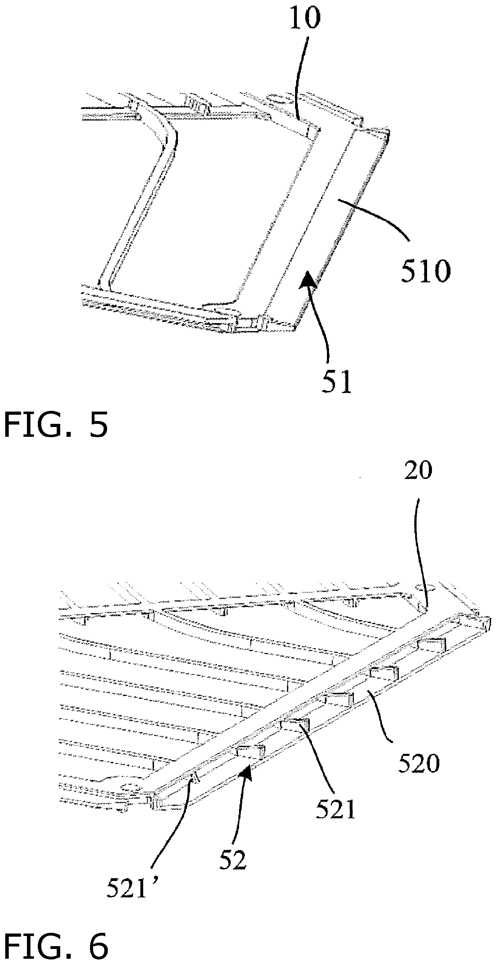

As depicted in FIG. 5, the first core fin 10 has the port lateral side part 51 constituting the port part 50 and tapered toward the outermost side in the transverse section parallel to the air flow direction. That is, the port lateral side part 51 of the first core fin 10 has two surfaces not in parallel with each other, and one of the surfaces facing each other to constitute the port part 50 is disposed slantly. In other words, in the port lateral side part 51 of the first core fin 10, the surface constituting the port part 50 is slanted from a direction of a plane including the first core fin 10. In this manner, the transverse section of the port part 50 is increased, as well as an angle between the port lateral side part 51 and an air flow entering via a vent port of the air treatment device is reduced, so as to reduce air flow inhibition.

As depicted in FIG. 6, the second core fin 20 has the port lateral side part 52 constituting the port part 50, and the port lateral side part 52 has a surface constituting the port part 50 and provided with a plurality of partitioning ribs 521. The surface constituting the port part 50, of the port lateral side part 52 is basically parallel to a plane including the second core fin 20. When the first core fin 10 and the second core fin 20 are stacked, the partitioning ribs 521 are in contact with the slant surface 510 of the first core fin 10. The slant surface 510 of the first core fin 10 and the parallel surface 520 of the second core fin 20 surround to constitute the port part 50. The partitioning ribs 521 are supported between the slant surface 510 and the parallel surface 520, a partitioning rib 521' along with the partitioning ribs 521 can partition the air flow path for improved evenness of the air flow, as well as can support the port lateral side part 51 for enhanced strength of the heat exchanger 1.

As depicted in FIG. 5, the port lateral side part 51 of the first core fin 10 has a surface directed toward the air flow passage, and the surface has a slant face outline shape being slant, and a section tapered toward the outermost side of the port part 50. It should be comprehended that the slant surface can be replaced with a curved face or a stepped face, and has only to have the maximum height on the outermost side of the port part 50.

As depicted in FIG. 1, the heat exchanger 1 including the first core fins 10, the second core fins 20, and the films 30 being stacked further includes a shell 70 accommodating the core fins 10 and 20 and the films 30. The shell 70 of the heat exchanger 1 is attached in the air treatment device or the like via a guide rail formed by bending a baffle plate 60. The single partitioning rib closest to the guide rail in the port part 50 is preferably shorter than the remaining partitioning ribs in the port part 50. In this manner, an air flow can smoothly flow into a flow path adjacent to the guide rail. This minimizes influence of the guide rail on flow rates of suction air and exhaust air at a local position in the port part 50. As depicted in FIG. 6, the partitioning rib 521' on a leftmost side slightly extends on the parallel surface 520 of the port part 50, and the remaining partitioning ribs basically extend entirely on the parallel surface 520 of the port part 50.

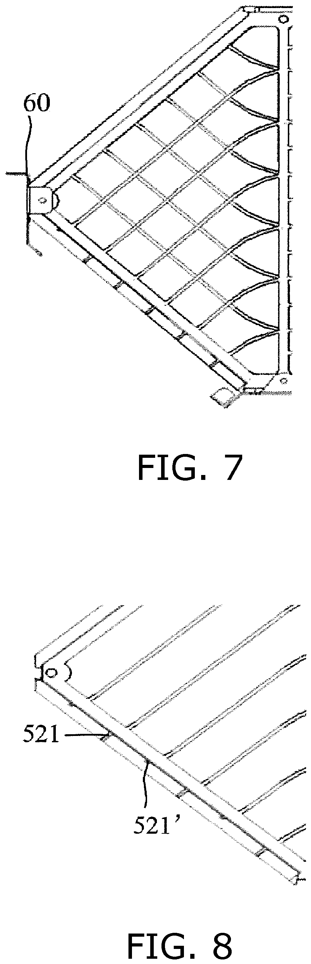

According to an alternative embodiment, the short partitioning ribs 521' and the long partitioning ribs 521 are disposed alternately. As depicted in FIG. 8, among them, the short partitioning rib 521' is disposed at an end of the port part 50 closest to the guide rail. The port part can thus be further increased in flow area.

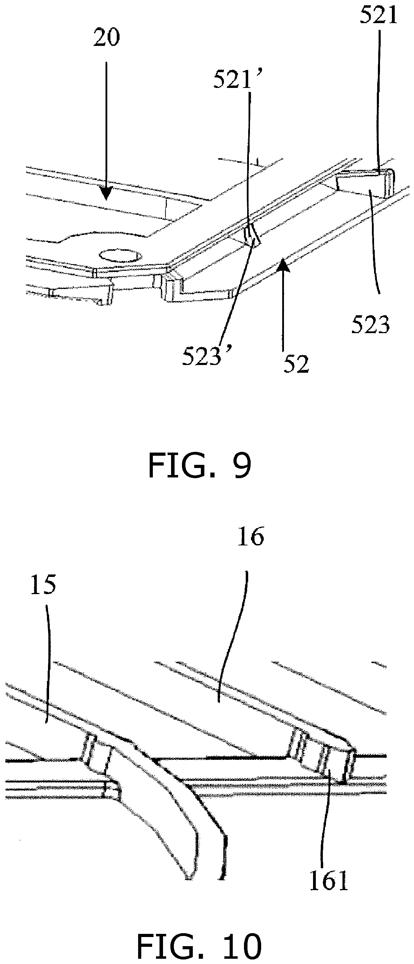

According to the preferred embodiment of the present invention, as depicted in FIG. 9, the partitioning ribs 521 and 521' in the port lateral side part 52 can be provided with channelizing parts 523 and 523' that are shaped to guide an air flow in a travel direction of the air flow. When the heat exchanger 1 is disposed in the air treatment device 100 as depicted in FIG. 19, the air flow enters substantially parallelly from the fresh air port 110 or the return air port 130. An air flow normally enters substantially in parallel with a top plate and a bottom plate of a housing of the device 100. In this case, the channelizing parts 523 and 523' of the partitioning ribs 521 and 521' are shaped to guide the air flow in the parallel air flow direction.

As to the short partitioning rib 521', the channelizing part 523' includes a slant face provided at a tip of the partitioning rib 521', and is disposed slantly on the parallel surface of the port lateral side part 52. In comparison to a case where the tip has a vertical face, the slant face can reduce the angle from an air flow entering in parallel with the vent port of the air treatment device, and can further reduce air flow inhibition for reduction in pressure loss. As to each of the long partitioning ribs 521, the channelizing part 523 provided thereon includes a curved face to cause a tip of the partitioning rib 521 to face an air flow entering direction, so as to guide an air flow entering parallelly to the vent port of the air treatment device and reduce air flow inhibition for reduction in pressure loss.

According to the preferred embodiment, the air flow passage constituted by the first core fin 10 and the second core fin 20 being stacked has a height on the outermost side of the inlet, and the height is longer than the fin interlayer distance in a direction perpendicular to the air flow direction at a different position between the inlet and the outlet of the air flow passage. This configuration increases the flow rate of the air flow entering the air flow passage of the heat exchanger, for improvement in heat exchange efficiency of the heat exchanger.

The first and second core fins 10 and 20 having the hexagonal shape as depicted in FIG. 3 and FIG. 4 have the first, second, third, and fourth short lateral sides 101, 102, 103, 104, and 201, 202, 203, and 204, respectively. According to the preferred embodiment, the first and second short lateral sides 101 and 102 of the first core fin 10 each have the port lateral side part 51 having the slant surface, whereas the first and second short lateral sides 201 and 202 of the second core fin 20 each have the port lateral side part 52 provided with the partitioning ribs. In a case where the partitioning ribs 521 at the first and second short lateral sides 201 and 203 of the second core fin 20 are in contact with the slant surfaces 510 of the first and second short lateral sides 101 and 102 of the first core fin 10, the first and second short lateral sides 101, 201, 102, and 202 constitute the port parts 50. When the port parts 50 are constituted by the first and second short lateral sides, the port lateral side parts 51 and 52 at the third short lateral sides 102 and 202 and the fourth short lateral sides 104 and 204 of the first core fin 10 and the second core fin 20 are brought into contact with each other by the parallel surface on a rear side and are joined together. As depicted in FIG. 14, the film 30 can also be interposed between the two parallel surfaces to prevent any air flow from flowing to the third and fourth short lateral sides.

Furthermore, the port lateral side part 52 having the partitioning ribs 521 are provided at each of the third and fourth short lateral sides 103 and 104 of the first core fin 10, so as to be structured similarly to the port lateral side part 52 at each of the first and second short lateral sides 201 and 202 of the second core fin 20. The partitioning ribs 521 in the port lateral side part 52 at each of the third and fourth short lateral sides 103 and 104 of the first core fin 10 are provided on a surface opposite to the slant surface 510 having the first and second short lateral sides 101 and 102 of the first core fin 10.

Correlatively, the port lateral side part 51 having the slant surface 510 is provided at each of the third and fourth short lateral sides 203 and 204 of the second core fin 20. That is, the port lateral side part 51 at each of the third and fourth short lateral sides 203 and 204 of the second core fin 20 has the slant surface 510, so as to be tapered toward the outermost side of the port part 50 in the transverse section parallel to the air flow direction. The slant surface is positioned opposite to a side face provided with the partitioning ribs 521 of the second core fin 20.

When the slant surface 510 of the port lateral side part 51 at each of the third and fourth short lateral sides 203 and 204 of the second core fin 20 faces to be in contact with the partitioning ribs 521 in the port lateral side part 52 at each of the third and fourth short lateral sides 103 and 104 of the first core fin 10, the third and fourth short lateral sides can constitute the port parts 50 of crossing flow paths.

As apparent in FIG. 3 and FIG. 4, the first core fin 10 and the second core fin 20 having the hexagonal shape have frames including hexagonal outer frames, principal partitioning ribs 15 and 25 and longitudinal ribs 17 and 27 positioned in the outer frames. The principal partitioning ribs 15 and 25 extend between one set of the two port lateral side parts 51 and 51 or 52 and 52 in the air flow direction of the air flow passage. Preferably, the partitioning ribs 521 and the principal partitioning ribs 15 and 25 on the port lateral side parts 52 of the first core fin 10 and the second core fin 20 are provided continuously. The longitudinal ribs 17 and 27 are each provided to transverse the air flow direction of the air flow passage, to partition the hexagonal outer frame into two triangular regions and a quadrate region positioned between the two triangular regions. The longitudinal ribs are provided to connect the principal partitioning ribs and auxiliary partitioning ribs to enhance strength of the core fins, as well as avoid deformation of the films in the air flow direction.

According to the preferred embodiment, the quadrate region in the core fin frame further includes auxiliary partitioning ribs 16 and 26 basically parallel to the principal partitioning ribs. The auxiliary partitioning ribs 16 and 26 extend from the longitudinal ribs 17 and 27 on a first side of the quadrate region to a second side of the longitudinal ribs 17 and 27. Preferably, distances from the auxiliary partitioning ribs 16 and 26 to the principal partitioning ribs 15 and 25 adjacent on respective sides are equal so as to guide an air flow to pass the heat exchanger more evenly and effectively avoid deformation of the films.

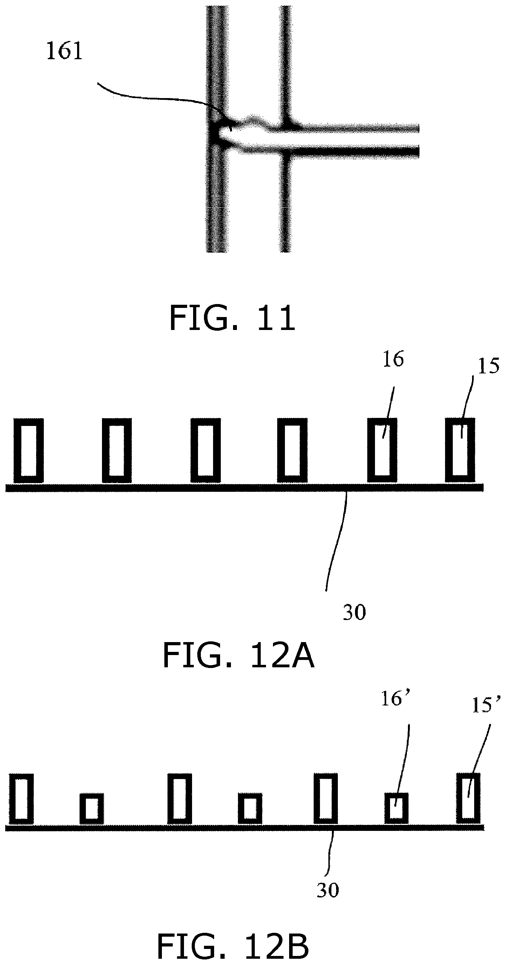

For better air flow guiding, the auxiliary partitioning ribs 16 and 26 may include channelizing parts 161 provided at tips adjacent to the longitudinal ribs 17 and 27. As depicted in FIG. 10 and FIG. 11, exemplarily in the first core fin 10, the channelizing part 161 has an end curved shape curved in a curving direction of the longitudinal ribs 17 and 27, so as to guide an air flow and reduce air flow inhibition.

For better air flow guiding, as depicted in FIG. 3 and FIG. 4, the long lateral sides 205 and 206 of the second core fin 20 and the long lateral sides 105 and 106 of the first core fin 10 have curved faces 2051, 2061, 1051, and 1061 substantially parallel to the principal partitioning ribs 15 and 25 and disposed close to the port parts. In this manner, this configuration achieves air flow guiding in a flow path close to the long lateral side, can reduce pressure loss, and can reduce air flow inhibition.

For further improvement in sealing property in the heat exchanger 1, each of the films 30 may be bonded to a lateral side of a front face or the partitioning ribs of the adjacent core fin.

The long lateral sides of the first core fin 10 and the second core fin 20 may be further provided with pin holes 18 and 28, and the heat exchanger may further include a fixing pillar (not depicted). During processing, the fixing pillar may be fixed to a jig, and the films may be bonded to the core fins. Subsequently, the fixing pillar may alternately drill the pin holes 18 and 28 in the plurality of first core fins 10 provided with the films 30 and the second core fins 20 provided with the films 30, and the core fins may be tightly bound to form a core. Alternatively, the fixing pillar may alternately drill one of the core fins and one of the films, and the core fins and the films may be tightly bound to form a core.

Preferably, the films 30 are substantially identical in outline shape to the core fins 10 and 20, and the films 30 are also provided with through holes fitted with the fixing pillar. In this manner, the fixing pillar is used to securely position frame edges of the films 30 and the core fins 10 and 20, specifically, convex faces 41 for film bonding, to avoid air flow leakage due to bonding the films positioned incorrectly.

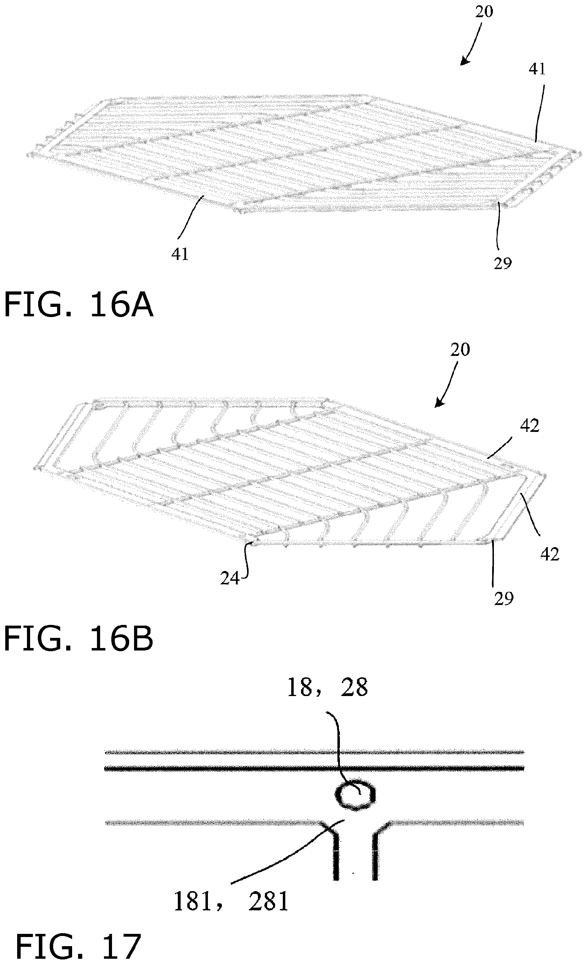

Preferably, as depicted in FIG. 17, in order to prevent air flow leakage from the films 30 to the pin holes 18 and 28, there can be provided spread faces 181 and 281 at edges of the pin holes in the core fins, to secure close adhesion of the films to the core fins also at the through holes.

Preferably, for better convenience for stacking the first core fins 10 and the second core fins 20, there can be provided, on the front faces of the core fins, a marker for the first core fin 10 and a marker for the second core fin 20. Examples of the markers include numbers and graphic forms. The markers thus provided are useful for distinction between the first core fins 10 and the second core fins 20, as well as distinction between the front and rear faces of the core fins, for better processing convenience.

Preferably, for better convenience for stacking the first core fins 10 and the second core fins 20, as depicted in FIG. 18, the first core fins 10 and the second core fins 20 may be provided, at the frame edges thereof, with positioners 14 and 24 fitted to each other. Provision of the positioners 14 and 24 enhances assembly convenience. Furthermore, the positioners 14 and 24 are fitted to each other for improvement in sealing property of the core.

The first core fins 10 and the second core fins 20 are further provided, at edges (specifically, corners of the frame edges), with cut-away parts 19 and 29. After the plurality of core fins 10 and 20 are tightly bound by the fixing pillar, an adhesive (e.g. silica gel) is injected into the cut-away pats 19 and 29 to further seal the core.

Subsequently, as depicted in FIG. 1, the shell 70 is provided around the core, and a sealing material is provided between the core and the shell 70 to secure the sealing property of the heat exchanger and prevent air flow leakage.

Preferably, the longitudinal ribs 17 and 27, the principal partitioning ribs 15 and 25, and the hexagonal outer frames of the first core fin 10 and the second core fin 20 have continuous flat surfaces that are normally called the rear faces of the core fins. The films 30 are bonded to the rear faces by means of adhesion with use of an adhesive, hot melt, or the like, and the front faces of the core fins 10 and 20 are fitted to the rear faces of the adjacent core fins. According to an alternative embodiment, as depicted in FIG. 16A and FIG. 16B, the convex faces 41 can be provided on the rear faces to which the film 30 is bonded, of the first core fin 10 and the second core fin 20. The front faces of the first core fin 10 and the second core fin 20 are provided with concave faces 42, the films 30 are bonded to the rear faces by means of adhesion with use of an adhesive or hot melt. After the core fins and the films are stacked integrally, the concave faces 42 and the convex faces 41 can be fitted to each other for improvement in sealing property between the core fins 10 and 20 and the films 30 adjacent to each other.

The longitudinal ribs 17 and 27 have a height in a core fin stacking direction, and the height may be equal to or less than the heights of the principal and auxiliary partitioning ribs 16 and 26 in the core fin stacking direction.

The pin holes 18 and 28 are further provided in the outer frames of the first core fins 10 and the second core fins 20. After the plurality of core fins is stacked and assembled, the fixing pillar (not depicted) grills in the pin holes to fix the plurality of core fins. The sealing property of the heat exchanger can be further improved, and the pin holes can be further utilized to accurately position relatively the core fins 10 and 20 upon attachment.

The partitioning ribs 15, 16, 25, and 26 in the air flow passage between the first core fin 10 and the second core fin 20 may have a plurality of disposition modes.

As depicted in FIG, 12A, exemplarily in the first core fin 10, all the principal and auxiliary partitioning ribs 15 and 16 in the core fin 10 are equal in height in the core fin stacking direction, and the principal and auxiliary partitioning ribs being attached have first sides in contact with the film 30.

As depicted in FIG. 12B, principal partitioning ribs 15' of the first core fin 10 are higher than auxiliary partitioning ribs 16' in the core fin stacking direction. All the partitioning ribs have first ends flush with each other in the section perpendicular to the air flow direction to be bonded with the film 30, and second ends varied in height disposed alternately. This configuration effectively prevents deformation of the films, and also achieves increase in area of the air flow paths.

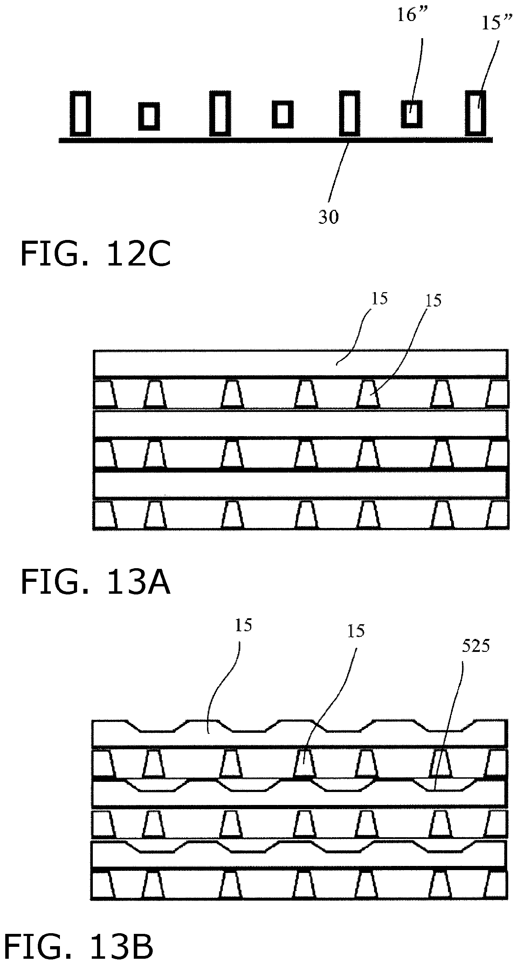

As depicted in FIG. 12C, principal partitioning ribs 15" are higher than auxiliary partitioning ribs 16". All the principal partitioning ribs 15" have first ends flush with each other so as to be bonded with the film, whereas the auxiliary partitioning ribs 16" each have a height to dispose a top between two ends of the principal partitioning rib 15", that is, the auxiliary partitioning ribs 16" being attached are disposed between the two adjacent films 30 without direct contact with any one of the films 30, for effective prevention of film deformation and increase in area of the air flow paths.

As depicted in FIG. 13A and FIG. 13B, according to the preferred embodiment, the partitioning ribs 15, 16, 25, and 26 have lateral ends provided with the film and smaller in width than lateral ends distant from the film, of the partitioning ribs. The width of the lateral end of the partitioning rib typically indicates a sectional width in a plane perpendicular to the air flow direction of the partitioning ribs 15, 16, 25, and 26. This configuration effectively prevents deformation of the films, and also achieves increase in area of the air flow paths.

Furthermore, as depicted in FIG. 13B, exemplarily in the first core fin 10, the partitioning ribs 15 each have a side distant from the bonded film and provided with an opening 525 allowing passage of an air flow. The opening 525 above each of the partitioning ribs 15 may have a tooth shape or a wave shape. This configuration effectively prevents deformation of the films, and also achieves increase in area of the air flow paths.

According to the preferred embodiment of the present invention, the films 30 are preferably made of plastic such as a high polymer material, and the film made of such plastic can be washed easily and have a long working life. When the heat exchanger includes such plastic films, the heat exchanger can be easily washed with liquid (e.g. water). In this case, the enlarged port parts according to the present invention are structured to allow cleaning liquid to deeply enter the heat exchanger, as well as allow the liquid to be led out of the heat exchanger. Specifically when the core fin includes the port lateral side part having the tapered transverse section, the slant surface of the port lateral side part is useful for guiding the cleaning liquid to enter or leave the heat exchanger, for enhanced washing effect and efficient drying of the heat exchanger. The films according to an alternative embodiment may be made of paper.

According to the preferred embodiment, the core fins 10 and 20 have the hexagonal shape and the port parts 50 are provided at the short lateral sides. It should be comprehended that, according to another alternative embodiment, the hexagonal core fins may have lateral sides equal in length. According to a still another different alternative embodiment, the core fins may have any other shape such as a quadrilateral shape. In this case, opposite lateral sides of the quadrilateral shape are paired to constitute the air flow passage.

FIG. 15 is a schematic plan view of a core fin in a heat exchanger according to another preferred embodiment of the present invention. A core fin 10' includes port parts schematically depicted. a first side of the core fin 10' can be provided with a port part 50' serving as an inlet, and an opposite second side can be provided with a port part 50' serving as an outlet, and an air flow can flow from the inlet to the outlet. The port parts 50' are also constituted by port lateral side parts of two adjacent stacked core fins, the port lateral side part of one of the core fins has a flat face constituting the port part, the port lateral side part of another one of the core fins is provided with port part partitioning ribs 501'. The port part partitioning ribs 501' are in contact with the flat face to constitute the port part. The core fins each include principal partitioning ribs 502' extending from one of the port parts to another one of the port parts. The principal partitioning ribs 502' are utilized to bond the film. In particular, the port part partitioning ribs 501' of the core fin are smaller in width than the principal partitioning ribs 502', and the adjacent port part partitioning ribs 501' at the port part of the core fin 10' are therefore made smaller in length of a space therebetween than the adjacent principal partitioning ribs 502'. Provision of the port part thus configured similarly leads to increase in flow rate of the air flow entering and leaving the port part.

As depicted in FIG. 15, the port part partitioning ribs 501' at the core fin corresponds in the number to the principal partitioning ribs 502'. Furthermore, preferably, the principal partitioning ribs 502' are formed integrally with the corresponding port part partitioning ribs 501' and extend equally.

It should be comprehended that the port lateral side part having the narrow port part partitioning ribs as depicted in FIG. 15 may be used while including a port lateral side part disposed horizontally, or may be used in cooperation with the port lateral side part having the transverse section tapered toward the outermost side. When the port lateral side part having the narrow port part partitioning ribs and the port lateral side part having the transverse section tapered toward the outermost side cooperatively constitute the port part, the port part can be further increased in inlet area for increase in flow rate of the air flow entering and leaving the port part.

In the heat exchanger thus configured, the port parts on the air flow have a flared shape toward the outermost side or the port part partitioning ribs are decreased in width, to reduce resistance of the air flow entering the heat exchanger, further smooth the air flow, and increase flow speed in the heat exchanger for improvement in heat exchange efficiency of the heat exchanger.

A frame structure of the core fins according to the present invention is adopted to securely protect and support the films in the heat exchanger, reduce air flow inhibition by the films, and prolong the working life.

The present invention has been disclosed in accordance with the preferred embodiments, without limiting the present invention. Those skilled in the art can apply possible modifications and corrections without departing from the spirit and the scope of the present invention. Therefore, any appropriate corrections, equivalent modifications, and qualifications applied to the embodiments according to technical substance of the present invention without departing from the subject matters of the technical idea of the present invention will remain within the protection scope prescribed in the claims of the present invention.

### REFERENCE SIGNS LIST

1 heat exchanger
10 first core fin
20 second core fin
10' core fin
101, 201first short lateral side
102, 202second short lateral side
103, 203third short lateral side
104, 204fourth short lateral side
105, 106, 205, 206 long lateral side
1051, 1061, 2051, 2061 curved face
14,24 positioner
15, 25 principal partitioning rib
16, 26 auxiliary partitioning rib
17, 27 longitudinal rib
18, 28 pin hole
181, 281 spread face
19, 29 cut-away part
30 film
41 convex face
42 concave face
50, 50' port part
51 port lateral side part
510 slant surface
52 port lateral side part
520 parallel surface
521, 521' partitioning rib
523, 523' principal partitioning rib channelizing part
525 opening
161 auxiliary partitioning rib channelizing part
60 baffle
70 shell
501' port part partitioning rib
502' principal partitioning rib
100 air treatment device
110 fresh air port
120 supply air port
130 return air port
140 exhaust air port

## Claims

1. A heat exchanger comprising a plurality of core fins and a plurality of films, each of the films attached to a side face of each of the core fins, the core fins and the films alternately stacked to constitute an air flow passage,
the plurality of core fins including a first core fin and a second core fin, the first core fin and the second core fin stacked to constitute the air flow passage therebetween,
the air flow passage including two port parts disposed to face each other, one of the port parts serving as an inlet and another one of the port parts serving as an outlet, an air flow flowing from the inlet to the outlet in an air flow direction, wherein
the first core fin and the second core fin being stacked each include a port lateral side part to constitute the port parts,
in a stacking direction of the first core fin and the second core fin, a fin interlayer distance on at least an outermost side of at least one of the port parts is longer than a fin interlayer distance at a different position between the inlet and the outlet of the air flow passage, and/or
the port lateral side part of the second core fin is provided with a port part partitioning rib, the port lateral side part of the first core fin has a surface in contact with the port part partitioning rib, and the port part partitioning rib is smaller in width than a principal partitioning rib extending between the port lateral side part of the port part serving as the inlet and the port lateral side part of the port part serving as the outlet.

2. The heat exchanger according to claim 1, wherein the port lateral side part of the first core fin is tapered toward the outermost side in a transverse section parallel to the air flow direction.

3. The heat exchanger according to claim 2, wherein the port lateral side part of the second core fin has a surface directed toward the first core fin and provided with a plurality of port part partitioning ribs.

4. The heat exchanger according to claim 2, wherein the port lateral side part of the first core fin has a surface directed toward the air flow passage and having one of outline shapes consisting of a slant face, a curved face, and a stepped face.

5. The heat exchanger according to claim 1, wherein the fin interlayer distance on an outermost side of the inlet of the air flow passage is longer than the fin interlayer distance perpendicular to the air flow direction at a different position between the inlet and the outlet of the air flow passage.

6. The heat exchanger according to claim 3, wherein
the port parts each have a first end and a second end in an extending direction of the port lateral side part, and
the partitioning rib closest to the first end among the plurality of port part partitioning ribs of the second core fin is shorter than remaining partitioning ribs.

7. The heat exchanger according to claim 3, the heat exchanger further comprising a shell accommodating the plurality of core fins and the plurality of films, the air flow passage including a first flow path and a second flow path crossing each other, the first flow path and the second flow path each having an inlet and an outlet, the inlet of the first flow path being disposed adjacent to the outlet of the second flow path, the inlet of the second flow path being disposed adjacent to the outlet of the first flow path, wherein
the shell is provided with a baffle positioned adjacent to the inlet and the outlet, the baffle is bent to constitute a filter guide rail, and the port part partitioning rib at a position corresponding to the guide rail is shorter than remaining port part partitioning ribs.

8. The heat exchanger according to claim 3 or 6, wherein the port part partitioning ribs each have an end provided with a channelizing part shaped to guide an air flow in a travel direction of the air flow.

9. The heat exchanger according to claim 3, wherein
the plurality of port part partitioning ribs of the second core fin includes a relatively short first port part partitioning rib and a relatively long second port part partitioning rib provided alternately, and
the port parts each include a first end and a second end in an extending direction of the port lateral side part, and the port part partitioning rib closest to the first end corresponds to the first port part partitioning rib.

10. The heat exchanger according to claim 1, wherein
the first core fin includes a first frame, the second core fin includes a second frame,
the first frame and the second frame each include
an outer frame having a hexagonal shape,
a principal partitioning rib extending from the inlet to the outlet basically in the air flow direction of the air flow passage, and
two longitudinal ribs extending to transverse the air flow direction in the air flow passage, the two longitudinal ribs partitioning the outer frame into two triangular regions and a quadrate region positioned between the two triangular regions, and
the quadrate region further includes an auxiliary partitioning rib basically parallel to the principal partitioning rib.

11. The heat exchanger according to claim 10, wherein the auxiliary partitioning rib is equally distant from adjacent principal partitioning ribs provided on respective sides of the auxiliary partitioning rib.

12. The heat exchanger according to claim 10, wherein the auxiliary partitioning rib is equal to or less than the principal partitioning rib in terms of height in the stacking direction.

13. The heat exchanger according to claim 1, wherein the principal partitioning rib extending between the port lateral side part of the port part serving as the inlet and the port lateral side part of the port part serving as the outlet has a side bonded with the film is smaller in width than a side distant from the film.

14. The heat exchanger according to claim 1, wherein the principal partitioning rib extending between the port lateral side part of the port part serving as the inlet and the port lateral side part of the port part serving as the outlet has a side distant from the film being bonded and provided with an opening allowing passage of an air flow.

15. The heat exchanger according to claim 1, wherein
the first core fin includes a first frame, the second core fin includes a second frame, the first frame and the second frame are stacked to have an identical outline shape,
the port lateral side part of the first core fin and the port lateral side part of the second core fin are provided along a first portion and a second portion disposed at opposite corners of the first frame and the second frame,
each of the first frame and the second frame further includes a third portion and a fourth portion disposed at opposite corners, a crossing port lateral side part is provided along the third portion and the fourth portion,
the crossing port lateral side part of the first frame has a surface opposite to the second core fin and provided with a plurality of port part partitioning ribs, and
the crossing port lateral side part of the second frame is tapered toward the outermost side in a transverse section parallel to the air flow direction, or the port part partitioning ribs at the crossing port lateral side part of the first frame are smaller in width than the principal partitioning rib extending between the port lateral side part of the port part serving as the inlet and the port lateral side part of the port part serving as the outlet.

16. The heat exchanger according to claim 15, wherein the crossing port lateral side part of the second frame has an outline shape of any one of a slant face, a curved face, and a stepped face, and the outline shape and the partitioning rib at the port lateral side part of the second core fin are provided in each of two side faces of the second frame.

17. An air treatment device comprising:
the heat exchanger according to any one of claims 1 to 16, the heat exchanger including the port parts each including a first inlet, a first outlet, a second inlet, and a second outlet,
a fresh air port in communicate with the first inlet to import a fresh air flow, and a supply air port in communication with the first outlet to export the fresh air flow, and
a return air port in communication with the second inlet to import an indoor air flow, and an exhaust air port in communication with the second outlet to export the indoor air flow, wherein
the fresh air flow and the indoor air flow cross each other and flow in the heat exchanger to execute heat exchange.
